# EUROPEAN PATENT APPLICATION

(11) **EP 4 844 499 A1**
(43) Date of publication of application: **25.11.2026**
(21) Application number: 25177391.7
(22) Date of filing: 19.05.2025
(51) Int. Cl.: G05B 13/02

(54) **MODEL-BASED AND DATA-DRIVEN APPROACHES FOR HIGH PERFORMANCE SERVO MOTION**

(71) Applicant: ABB SCHWEIZ AG, 5400 Baden (CH)
(72) Inventor: WAHRBURG, Arne, 64331 Weiterstadt (DE); SCHLAKE, Jan-Christoph, 64293 Darmstadt (DE); JURVANEN, Janne, 02620 Espoo (FI); Huang, William-Cheng, Beijing, 110101 (CN)
(74) Representative: Maiwald GmbH

(57) **Abstract**

There is provided a method for achieving high tracking performance in servo motion application in an industrial context, the method comprising: applying iterative learning control, ILC, on the servo motion application for controlling a k-th run of a motion sequence of the servo motion application; during and/or after the k-th run, obtaining, from the application of the ILC on the servo motion application, first data indicative of an ILC output control signal based on a difference between a movement trajectory of the k-th run and a predetermined movement trajectory of the motion sequence; obtaining, from a feed-forward control for controlling the servo motion application, second data different from the first data, wherein the second data are indicative of a feed-forward control element for controlling a difference between a movement trajectory of a (k+1)-th run of the motion sequence to be performed by the servo motion application and the predetermined movement trajectory; and controlling the (k+1)-th run of the servo motion application based on the first data and the second data.

## Description

### FIELD OF THE INVENTION

The invention relates to a method for achieving high tracking performance in servo motion application in an industrial context. Moreover, the invention relates to a data processing apparatus, to a computer-readable medium, to a computer program product and to a use of the method.

### BACKGROUND

There is a problem of achieving high tracking performance in servo applications while keeping commissioning effort reasonably small. This is in particular a problem in an industrial context.

Iterative learning control (ILC) is known as an approach capable of achieving very high tracking accuracy, requiring neither extensive model calibration nor large amounts of data. While earlier ILC results in academic literature were focusing on purely repetitive tasks, more recent developments (namely parameterized ILC with basis functions) enable task flexibility in the sense of accurately tracking arbitrary motion profiles. However, from a practical servo motion perspective, one major issue remains open in the state-of-the-art.

Namely, the ILC loop is closed around the conventional servo loops with the only ILC output being the torque feed-forward signal, for example. While ILC achieves high tracking accuracy, this is typically achieved by large feed-forward torque that "override" the torque generated by feed-back controls. In other words, feed-back and feed-forward control are opposing each other. Consequently, ILC only works well for the specific feedback controller parameters it has been trained on. Any change in the servo loop parameters thus requires re-commissioning or re-training the ILC loop. As an additional downside, the motor position and motor speed tracking errors cannot be used for supervision, because tracking accuracy can be high despite large servo errors which are compensated for by feed-forward torque.

Hence, there is room and need for improvement regarding the achievement of high tracking performance in servo applications while keeping commissioning effort reasonably small, in particular in an industrial context.

### SUMMARY

In view of the above, it is an object of the present disclosure to overcome at least part of the drawbacks available regarding the achievement of high tracking performance in servo applications while keeping commissioning effort reasonably small, in particular in an industrial context.

Therefore, to address one or more of these drawbacks, there is provided, in a first aspect, a method for achieving high tracking performance in servo motion application in an industrial context. The method comprises applying iterative learning control (ILC) on the servo motion application for controlling a k-th run of a motion sequence of the servo motion application. The method further comprises, during and/or after the k-th run, obtaining, from the application of the ILC on the servo motion application, first data indicative of an ILC output control signal based on a difference between a movement trajectory of the k-th run and a predetermined movement trajectory of the motion sequence. The method further comprises obtaining, from a feed-forward control for controlling the servo motion application, second data different from the first data, wherein the second data are indicative of a feed-forward control element for controlling a difference between a movement trajectory of a (k+1)-th run of the motion sequence to be performed by the servo motion application and the predetermined movement trajectory. The method further comprises controlling the (k+1)-th run of the servo motion application based on the first data and the second data.

The method may be at least in parts computer-implemented. Preferably, the method is computer-implemented. Preferably, the method is implemented in a controller or control unit that is configured to perform the method.

The term servo motion is to be understood in a broad way and is intended to comprise different means of actuation, like a motor, pneumatic means, hydraulic means and piezoelectric means, for example.

Applying ILC on the servo motion application may be understood as controlling the servo motion application by using ILC. In particular, it may be meant that the servo motion application is intended to learn or improve, based on the application of the ILC, a predetermined movement or movement sequence. For example, a predetermined movement or movement sequence may be a movement from a predetermined first position to a predetermined second position. The servo motion application is intended to perform such predetermined movement sequence (from the predetermined first position to the predetermined second position and/or from the predetermined second position to the predetermined first position) several times, for example continuously or repeatedly. For example, the servo motion application may repeat a predetermined movement sequence, i.e. a movement from the predetermined first (second) position to the predetermined second (first) position. By applying ILC, it is intended that for a repetition or iteration of the predetermined movement sequence, i.e. for a k-th run out of a total of n runs (k<n) for example, the servo motion application may learn or may be controlled to improve its movement.

The expression "improve its movement" is to be understood in a broad way. It should be noted that for the predetermined movement sequence, a predetermined trajectory or movement trajectory may be defined. Said in other words, a predetermined and potentially optimal or desired movement trajectory may be defined, which defines how to move from the predetermined first position to the predetermined second position, for example. Such predetermined movement trajectory may be a theoretical optimal or desired way or path for how to move between the predetermined first and second positions. It shall further be noted that the servo motion application may be instructed to move between the predetermined first and second positions, i.e. to run the predetermined movement sequence. When doing so, the actual movement trajectory described, performed or run by the servo motion application for moving from the predetermined first position to the predetermined second position, for example, may be different from the predetermined movement trajectory, i.e. may be different from the theoretical optimal or desired way or path for how to move between the predetermined first and second positions. Such difference may be expressed and/or evaluated in different ways.

By applying ILC, a goal may be to reduce such difference to be below a predetermined threshold value, for example. Such difference may also be understood as representing an error. To reduce such difference or error, a control of the servo motion application may be adjusted for a new run of the motion sequence, in particular a control of the servo motion application may be adjusted for a next run (i.e. (k+1)-th run) based on the difference or error of the previous run (i.e. k-th run). For controlling the servo motion application, control parameters (like torque, force, motor speed, motor position and/or operational parameters associated therewith) may be adjusted. The above-mentioned first data may be indicative of one or more of these control parameters, for example. Such iterative control or iterative learning is intended to improve the actual movement trajectory of the servo motion application for each run until a predetermined number n of repetitions is achieved and/or until the predetermined threshold value, for example of a specific error key performance indicator (KPI), is reached, for example. It may then be said that the servo motion application is trained or sufficiently trained for moving between the predetermined first and second positions in a potential optimal or desired way.

It shall be noted that the method according to the first aspect develops the application of ILC even further, in particular by the above-outlined feature of obtaining, from a feed-forward control for controlling the servo motion application, second data different from the first data, wherein the second data are indicative of a feed-forward control element for controlling a difference between a movement trajectory of a (k+1)-th run of the motion sequence to be performed by the servo motion application and the predetermined movement trajectory.

By the expression "second data indicative of a feed-forward control element" it may be meant that the second data may be obtained from one or more different feed-forward control elements. Said in other words, different feed-forward control elements may provide different second data.

The second data may also affect same and/or different control parameters of the servo motion application as the first data do. For example, the second data may affect torque, force, motor speed, motor position and/or operational parameters associated therewith. Hence, the "difference" between the first data and the second data does not necessarily mean that different control parameters are affected. For example, both the first data and the second data may comprise that a torque value may need to be controlled, for example even in a same way or by a same control amount. However, such knowledge of how to control the servo motion application, e.g. the torque value, is obtained from different sources and/or different measurements with regard to the first data and the second data.

The method according to the first aspect is advantageous in several ways. For example, an amount of data for calibration of the servo motion application may be reduced. I.e., the servo motion application may be taught or calibrated faster and less resource intensive, for example less energy intensive. Hence, costs and/or time required may be reduced. Moreover, due to the usage of the second data and due to the controlling based on the first data and the second data, the solution as disclosed herein according to several examples of the present disclosure is easier to calculate on resource-constraint devices in comparison to conventional approaches, i.e. the conventional approaches where only such first data are used and no such second data are used. Hence, the solution as disclosed herein according to several examples of the present disclosure is of great advantage in particular in an industrial context. Said in other words, the solution as disclosed herein according to several examples of the present disclosure provides the option to include a logic in a unit controller that may execute the controlling due to the logic's low size matrices.

According to several examples of the present disclosure, obtaining the first data may comprise obtaining the ILC output control signal to be indicative of at least one of:
- a torque feed-forward of the servo motion application,
- a force feed-forward of the servo motion application,
- a motor position feed-forward of the servo motion application, and
- a motor speed feed-forward of the servo motion application.

Each of the torque feed-forward, the force feed-forward, the motor position feed-forward and the motor speed feed-forward may be associated with an actuation of the servo motion application, for example with a motor, pneumatic means, hydraulic means and/or piezoelectric means. Hence, it may be controlled or adjusted one or more of the following: a torque, a force, a motor position and a motor speed (and/or operational parameters associated therewith) that is related to and/or influences the movement trajectory of the servo motion application when performing a run of the motion sequence. An amount of energy consumption or movement constraints may be understood as representing an example for an operational parameter. Hence, a torque feed-forward or torque value at which a torque is to be controlled may be controlled directly or an amount of energy available for the torque feed-forward and/or constraints for the torque feed-forward may be controlled to indirectly control the torque feed-forward.

Hence, different sources (like torque, force, motor position and a motor speed for example) may be considered for improving a movement of the servo motion application. Thus, movement improvement is achieved more likely and/or more efficient.

According to several examples of the present disclosure, obtaining the first data may further comprise: measuring or estimating the movement trajectory during the k-th run.

The measuring may be a continuous measuring or may be a measuring every predetermined time period or time interval, for example every milli second. It shall be noted that measuring or estimating the movement trajectory may also be understood as measuring or estimating the values of one or more control parameters associated with the movement trajectory. For example, the measuring or estimating the movement trajectory may comprise measuring or estimating one or more values of control parameters like torque value(s), force value(s), motor position(s) and motor speed value(s).

According to several examples of the present disclosure, measuring or estimating the movement trajectory during the k-th run may further comprise: measuring or estimating at least one of the following during the k-th run and/or one or more control parameters associated therewith:
- a torque or torque value of the servo motion application,
- a force or force value of the servo motion application,
- a motor position or motor position value of the servo motion application, and
- a motor speed or motor speed value of the servo motion application.

According to several examples of the present disclosure, obtaining the second data from the feed-forward control may comprise: obtaining, as the feed-forward control element, a model-based feed-forward term for a model-based feed-forward control of the servo motion application to run the motion sequence. Controlling the (k+1)-th run of the servo motion application may comprise: adding the ILC output control signal to the model-based feed-forward term; obtaining a modified control signal as a result from the adding; and controlling the (k+1)-th run based on the modified control signal.

The model-based feed-forward term may represent a first option, e.g. an Option A, for improving and further developing an ILC approach.

Hence, calibration of the servo motion application may be achieved more efficiently.

According to several examples of the present disclosure, the method may further comprise deactivating the model-based feed-forward term by setting the model-based feed-forward term to zero. The method may further comprise obtaining the ILC output control signal as a result from the adding due to the model-based feed-forward term being deactivated. The method may further comprise controlling a run of the motion sequence of the servo motion application based on the ILC output signal and the model-based feed-forward term being deactivated. For example, the run may be the (k+1)-th run.

Said in other words, the second data may be equal to zero due to the deactivation of the model-based feed-forward term, i.e. due to the setting of the model-based feed-forward term to zero.

Hence, there is enabled a falling back to the conventional model-based solution, i.e. to using the first data only.

According to several examples of the present disclosure, the ILC output control signal is one of:
- an ILC torque feed-forward control signal for controlling a torque feed-forward of the servo motion application,
- an ILC force feed-forward control signal for controlling a force feed-forward of the servo motion application,
- an ILC motor position feed-forward control signal for controlling a motor position feed-forward of the servo motion application, and
- an ILC motor speed feed-forward control signal for controlling a motor speed feed-forward of the servo motion application.

Obtaining the second data from the feed-forward control may comprise: after the k-th run, obtaining as the feed-forward control element, based on the difference between the movement trajectory of the k-th run and the predetermined movement trajectory of the motion sequence, at least one of the following signals different from the ILC output control signal:
- the ILC force feed-forward control signal,
- the ILC force feed-forward control signal
- the ILC motor position feed-forward control signal, and
- the ILC motor speed feed-forward control signal.

Controlling the (k+1)-th run of the servo motion application may comprise: controlling the (k+1)-th run based on the ILC output control signal and the feed-forward control element.

A control signal may also be understood as representing a value or control value.

The feed-forward control element to be at least one of these signals different from the ILC output control signal may represent a second option, e.g. an Option B, for improving and further developing an ILC approach.

Hence, calibration of the servo motion application may be achieved more efficiently.

According to several examples of the present disclosure, obtaining the second data from the feed-forward control may comprise: deriving, as the feed-forward control element, basis function(s) of knowledge about dynamics of the servo motion application. Controlling the (k+1)-th run of the servo motion application may comprise: controlling the (k+1)-th run based on the ILC output control signal and the (set of) basis function(s).

The feed-forward control element to be the (set of) basis function(s) may represent a third option, e.g. an Option C, for improving and further developing an ILC approach.

According to several examples of the present disclosure, Option A, Option B and Option C may be used alone or together in any combination.

Hence, calibration of the servo motion application may be achieved more efficiently.

According to several examples of the present disclosure, the basis function may comprise: a first basis function, ${Ψ}_{1}^{k}$, related to a torque feed-forward associated with the servo motion application, a second basis function, ${Ψ}_{2}^{k}$, related to motor speed references associated with the servo motor application, and a third basis function, ${Ψ}_{3}^{k}$, related to motor position references associated with the servo motion application.

For example, the basis functions may be chosen as: ${Ψ}_{1}^{k} = \left[{\dot{q}}_{a , ref}^{k} {{q}^{¨}}_{a , ref}^{k} {{q}^{⃛}}_{a , ref}^{k} {{q}^{⃜}}_{a , ref}^{k}\right] ∈ {ℝ}^{N \times 4} ,$ ${Ψ}_{2}^{k} = \left[{{q}^{¨}}_{a , ref}^{k} {{q}^{⃛}}_{a , ref}^{k}\right] ∈ {ℝ}^{N \times 2} ,$ ${Ψ}_{3}^{k} = \left[{\dot{q}}_{a , ref}^{k} {{q}^{¨}}_{a , ref}^{k}\right] ∈ {ℝ}^{N \times 2} ,$ where *q*_{*a*,*ref*} is the reference position output trajectory of the load generated by the motion profile generator (i.e. the position that the load is supposed to track), and *q̇_{a,ref}*, *q̈_{a,ref}*, ${{q}^{⃛}}_{a , ref} , {{q}^{⃜}}_{a , ref}$ its first to forth derivative with regard to time. The index k indicates that the trajectories belong to the k-th run.

However, it should be noted that the basis function is not to be understood as being limited to these first, second and third basis functions. Rather, there may be more than three basis functions and/or there may be different basis functions. A selection of basis functions may be associated with characteristics of the servo motion application.

According to several examples of the present disclosure, the basis functions may be a function that considers the physics of the servo motion application. Driving the basis function may further comprise: updating the basis function to satisfy the following equation: ${{θ}^{˜}}^{k + 1} = Q ⋅ {{θ}^{˜}}^{k} + L ⋅ {{e}^{˜}}^{k} ,$ wherein *θ̃^{k}* is a parameter vector in the k-th run, wherein *θ̃*^{*k+*1} is a parameter vector in the (k+1)-th run, and wherein Q and L are parameter update matrices associated with the basis function. *ẽ^{k}*, is the measured (sampled) output tracking error, i.e. wherein *ẽ^{k}* is a parametrized error vector of the k-th run.

According to several examples of the present disclosure, the k-th run and the (k+1)-th run are iterations in a sequence of runs of the motion sequence.

For example, a total number of runs may be n, as already indicated above, with k and n representing natural numbers and n being larger than k.

According to a second aspect, there is provided a data processing apparatus. The data processing apparatus comprises one or more processors being configured to carry out the method of the first aspect.

According to several examples of the present disclosure, the data processing apparatus may further be configured to be communicatively connected with a servomotor associated with a servo motion application, the servo motion application for executing positioning tasks. The data processing apparatus may further be configured to apply the method of the first aspect at the servo motion application. The data processing apparatus may have data recording and storage capabilities for applying or executing the method of the first aspect. For example the data processing apparatus may comprise a memory for storing and reading data.

The servo motion application may be an application for performing positioning tasks, e.g. a point-to-point motion
According to a third aspect, there is provided a data processing system. The data processing system comprising a data processing apparatus of the second aspect. Additionally or alternatively, the data processing system comprises means for carrying out the method of the first aspect.

By "data processing system", according to several examples, it may be meant a car manufacturing line, a machine, an assembly line, a conveyor belt, a paper mill, a rolling mill, robotics, etc.

According to a fourth aspect, there is provided an industrial plant comprising a data processing apparatus of the second aspect. Additionally or alternatively, the industrial plant comprises a data processing system of the third aspect.

By "industrial plant", according to several examples, it may be meant an industrial plant, autonomous industrial plant or industrial production plant for discrete manufacturing, comprising production lines and/or assembly lines for example, for assembling one or more components into a final product for example.

According to a fifth aspect, there is provided a computer-readable medium comprising instructions which, when executed by a computing system, cause the computing system to perform the method of the first aspect. The computer-readable medium may be transitory or non-transitory, volatile or non-volatile. According to several examples, the computing system may be a PC or a control unit, for example.

According to a sixth aspect, there is provided a computer program product comprising instructions which, when executed by a computing system, enable or cause the computing system to perform the method of the first aspect. The computer program product may comprise a computer-readable medium comprising instructions of the computer program product.

According to a seventh aspect, there is provided a use of at least one of a data processing apparatus of the second aspect, a data processing system of the third aspect, an industrial plant of the fourth aspect, a computer-readable medium of the fifth aspect, and a computer program product of the sixth aspect.

In particular, according to several examples of the present disclosure, there is provided a use of the method of the first aspect to achieving high tracking performance in servo motion application, in particular in an industrial context.

Each of the second aspect to the seventh aspect is advantageous in several ways. For example, an amount of data for calibration of the servo motion application may be reduced. I.e., the servo motion application may be taught or calibrated faster and less resource intensive, for example less energy intensive. Hence, costs and/or time required may be reduced. Moreover, due to the usage of the second data and due to the controlling based on the first data and the second data, the solution as disclosed herein according to several examples of the present disclosure is easier to calculate on resource-constraint devices in comparison to conventional approaches, i.e. the conventional approaches where only such first data are used and no such second data are used. Hence, the solution as disclosed herein according to several examples of the present disclosure is of great advantage in particular in an industrial context. Said in other words, the solution as disclosed herein according to several examples of the present disclosure provides the option to include a logic in a unit controller that may execute the controlling due to the logic's low size matrices.

Optional features of the first aspect may form part of any of the second aspect to the seventh aspect, mutatis mutandis.

The computer-readable medium of the fifth aspect may have stored thereon the computer program product of the sixth aspect.

The term "obtaining", as used herein, may comprise, for example, receiving from another system, apparatus, device or process; receiving via an interaction with a user; loading or retrieving from storage or memory; measuring or capturing using sensors or other data acquisition devices, receiving or acquiring as a result from one or more data processing steps; receiving from estimations, for example from estimating one or more next positions in a k-th run of a movement trajectory of a motion sequence.

The indefinite article "a" or "an" does not exclude a plurality. In addition, the articles "a" and "an" as used herein should generally be construed to mean "one or more" unless specified otherwise or clear from the context to be directed to a singular form.

Unless specified otherwise, or clear from the context, the phrases "one or more of A, B and C", "at least one of A, B, and C", and "A, B and/or C" as used herein are intended to mean all possible permutations of one or more of the listed items. That is, the phrase "A and/or B" means (A), (B), or (A and B), while the phrase "A, B, and/or C" means (A), (B), (C), (A and B), (A and C), (B and C), or (A, B, and C).

The term "comprising" does not exclude other elements or steps. Furthermore, the terms "comprising", "including", "having" and the like may be used interchangeably herein.

The present specification may include one or more aspects, examples or features in isolation or combination whether specifically disclosed in that combination or in isolation. Any optional feature or sub-aspect of one of the above aspects applies as appropriate to any of the other aspects.

The above-described aspects will become apparent from, and elucidated with, reference to the detailed description provided hereinafter.

### BRIEF DESCRIPTION OF THE DRAWINGS

A detailed description will now be given, by way of example only, with reference to the accompanying drawing, in which:
- Figure 1 illustrates a control concept overview;
- Figure 2 illustrates sensitivity of conventional ILC to control loop changes after learning;
- Figure 3 illustrates with reference to Figure 2 feedback and feedforward torque without adaptation of motor references;
- Figure 4 illustrates robustness of the proposed approach to control loop changes after learning, according to several examples of the present disclosure;
- Figure 5 illustrates with reference to Figure 4 feedback and feedforward torque with adaptation of motor references, according to several examples of the present disclosure;
- Figure 6 illustrates a first process step of setup and preparation of the ILC, according to several examples of the present disclosure;
- Figure 7 illustrates a second process step of running the ILC, according to several examples of the present disclosure;
- Figure 8 illustrates a third process step of evaluating the ILC, according to several examples of the present disclosure;
- Figure 9 illustrates an architecture overview, according to several examples of the present disclosure;
- Figure 10 illustrates a flow diagram indicative of a method according to several examples of the present disclosure;
- Figure 11 illustrates a block diagram schematically showing a data processing apparatus according to several examples of the present disclosure; and
- Figures 12 to 19 illustrate diagrams for showing examples of components of basis functions according to several examples of the present disclosure.

### DETAILED DESCRIPTION

Achieving high position/ speed tracking performance is a key requirement in servo applications, in particular in an industrial context. Purely model-based controls can meet that requirement but require high effort in modelling and identifying the dynamics of the system at hand, which can be limiting in servo drive applications. Purely data-driven methods can conceptually also meet tracking requirements but typically require an unrealistically large amount of data for calibration. Iterative Learning Control (ILC) is a concept that combines model-based- and data-driven control to achieve high performance while keeping commissioning effort low.

In view thereof, according to several examples of the present disclosure, there is provided in this specification an extension of the ILC concept towards task flexibility in the sense of achieving high accuracy on varying motion profiles and being robust to changes in the servo loop, such as changes in feedback controller gains for example.

According to several examples of the present disclosure, in brief, such extension may be achieved by one or more of the following three options Option A, Option B and Option C, as outlined below in more detail.

Option A: No "plain" ILC is used but it is combined with conventional model-based feed-forward and feed-back control. The purely model-based solution provides decent baseline performance and ILC is only used to further improve performance. Hence, the approach according to Option A is modular and the ILC add-on can be deactivated at any time, falling back to the purely model-based solution, i.e. not having to stop operation entirely in case of issues with the data-driven approach.

Option B: The ILC approach is not only employed to refine the torque feed-forward, for example. In addition, the approach is extended to also "learn" or refine the motor position and speed references (of a servomotor) of a servo motion application, for example. Thereby, the same high tracking accuracy as in the conventional ILC approach is achieved, but without feed-back and feed-forward control working against each other. This makes the scheme robust to changes in the feedback controller parameters after ILC commissioning and allows using motor position and speed tracking errors for supervision purposes.

Option C: Instead of engineering the basis functions for the ILC in a tedious manual process, suitable basis functions are derived based on domain know-how, i.e. by exploiting knowledge about the dynamics of the servo motion application and/or the servo system.

According to several examples of the present disclosure, basic information about ILC as well as more detailed information about the three options Option A, Option B and Option C are outlined below.

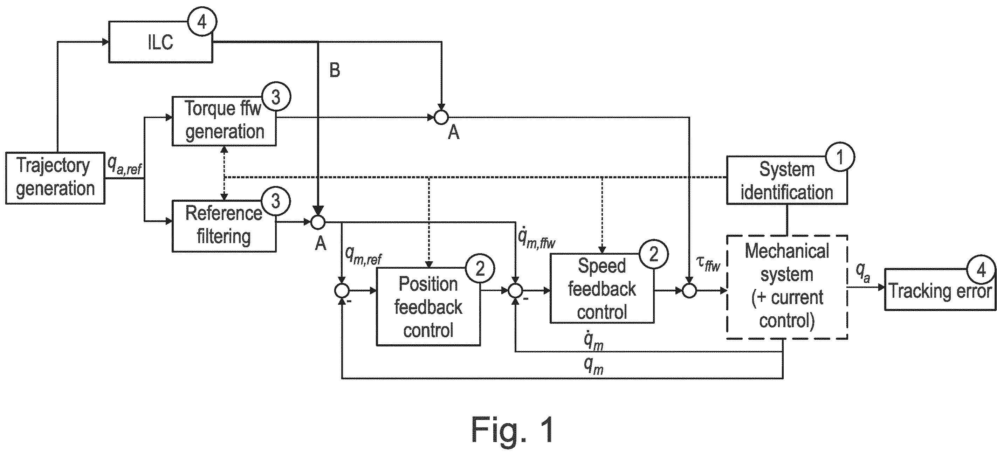

The main application of the disclosed solutions is high-end servo systems, in particular in an industrial context. Specifically, the aim is to achieve high tracking performance without requiring excessive commissioning effort. In this respect, it is envisioned that the disclosed concept can be interfaced from a graphical user interface in a commissioning tool on an external PC, for example, guiding the user during the ILC configuration stages. Once ILC learning is done, the trained ILC will run as an additional component on the Drive. The general concept is exemplified in Figure 1. It shall be noted that system identification, trajectory generation, feed-forward torque generation, reference filtering, and feed-back control, for example, are well-known to the skilled person with a lot of different potential embodiments of the individual blocks as illustrated in Figure 1. It shall further be noted that steps like system identification, trajectory generation, feed-forward torque generation, reference filtering and/or feed-back control, for example, have very often to be done by the skilled person for motion control, and are thus as such not unique for the solution as disclosed herein according to several examples. Relevant background art is disclosed, for example, in the document De Luca, A.: "Feedforward/ feedback law for the control of flexible robots". Proc. of IEEE International Conference on Robotics and Automation, 2000.

In the following reference is made to Figure 1, which illustrates a control concept overview.

As a first step 1 (encircled 1 in Figure 1), an identification of the system dynamics may be performed. It is emphasized that such an identification can be relatively coarse assuming e.g. a standard two-mass model, i.e. to inertias coupled by a spring with effective motor inertia, load inertia, torsional stiffness being identified parameters.

This design model serves as the basis for, in a second step 2 (encircled 2 in Figure 1), parameterizing the feed-back controllers, like e.g. a position feedback control and a speed feedback control. It shall be noted that the cascaded feedback control structure shown in Figure 1 is just an example. For the disclosed concept, any kind of feedback control can be used. A commonly used structure is a P-PI cascade (proportional control for position, proportional-integral control for speed). Furthermore, the calibrated design model obtained in step 1 is also used to, in a third step 3 (encircled 3 in Figure 1), parameterize torque feed-forward generation (torque ffw generation) and reference filtering, which comprise the model-based feed-forward control. Again, the disclosed approach is independent of the concrete approach of feed-forward control. And generally speaking, torque feed-forward and reference filtering are optional components. However, they are well-established in the state-of-the-art for achieving high tracking performance. The reference filtering block accounts for the fact that a system with compliantly coupled load cannot track arbitrary motion profiles. As shown e.g. in the above-referenced document "De Luca, A.", for the output position *qₐ* to track a given motion profile, the motor position reference profile has to be shaped to account for the flexible mode of the system. As an example, one way to filter the references and calculate the feed-forward torque is given by: $\begin{matrix}{τ}_{ffw} = \left({J}_{m}+{J}_{a}\right) ⋅ {{q}^{¨}}_{a , ref}^{k} + \frac{{J}_{m} {J}_{a}}{{k}_{T}} ⋅ {{q}^{⃜}}_{a , ref}^{k} , \\ {\dot{q}}_{m , ref} = {\dot{q}}_{a , ref}^{k} + \frac{{J}_{a}}{{k}_{T}} ⋅ {{q}^{⃛}}_{a , ref}^{k} . \\ {q}_{m , ref} = {q}_{a , ref}^{k} + \frac{{J}_{a}}{{k}_{T}} ⋅ {{q}^{¨}}_{a , ref}^{k} .\end{matrix}$ equation (1)

Therein, *q*_{*a*,*ref*} is the reference position output trajectory of the load generated by the motion profile generator (i.e. the position that the load is supposed to track), and *q̇_{a,ref}*, *q̈_{a,ref}*, ${{q}^{⃛}}_{a , ref} , {{q}^{⃜}}_{a , ref}$ its first to forth derivative with regard to time, and *q*_{*m*,*ref*} and *q*_{*m*,*ref*} are the motor position and speed references, respectively. The index k indicates that the trajectories belong to the k-th run.

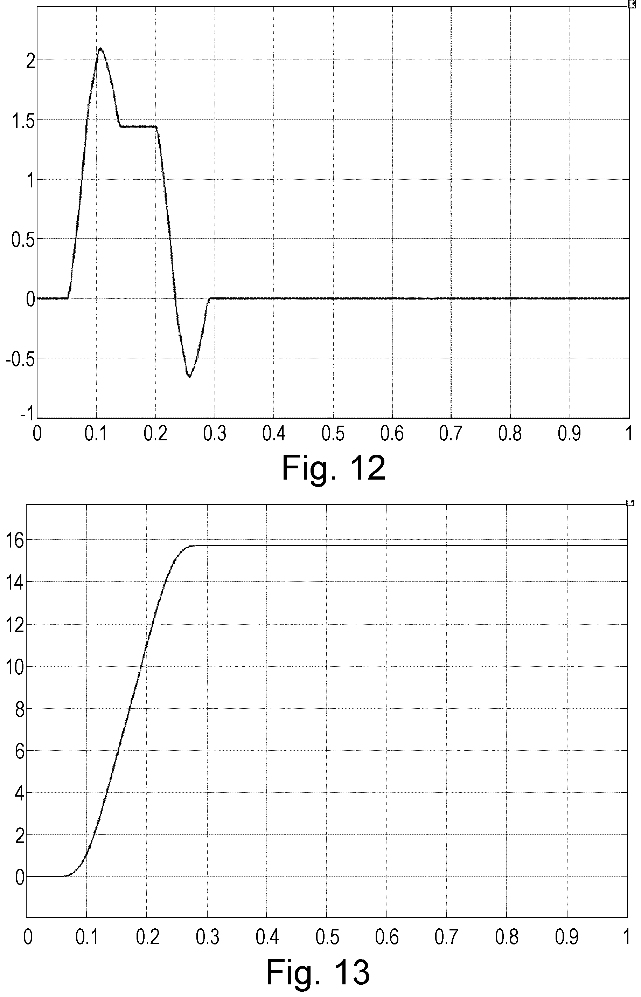

An example is given in the following for reasons of understandability:
The torque feed-forward (ffw) generation block takes the reference *q*_{*a*,*ref*} and the information from the reference filtering block to calculate the feed-forward torque t_{ffw}, as indicated in Figure 12. Figure 12 illustrates an example for feed-forward torque *t_{ffw}* for 1 second that comprises 1001 samples. The x-axis indicates the time and runs from 0 seconds to 1 second, the y-axis indicates the feed-forward torque *t_{ffw}* for a certain time.

The motor-side *q*_{*m*,*ref*} is generated by the reference filtering block and is used by the position control as reference value, as indicated in Figure 13. Figure 13 illustrates an example for motor-side *q*_{*m*,*ref*} for 1 second that comprises 1001 samples. The x-axis indicates the time and runs from 0 seconds to 1 second, the y-axis indicates the motor-side *q*_{*m*,*ref*} for a certain time.

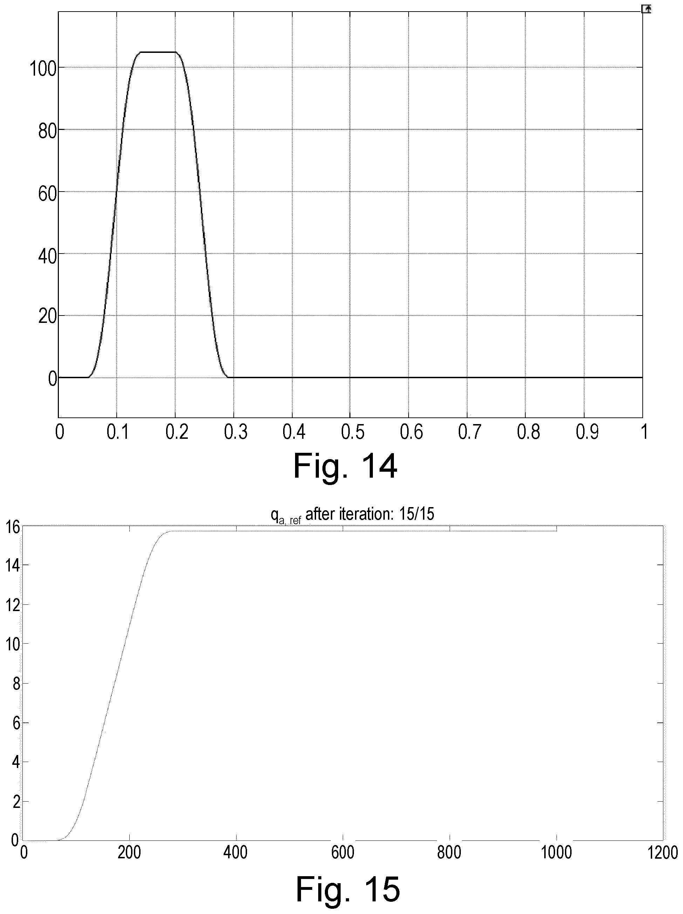

The motor-side *q̇_{m,ref} = q̇_{m,ffw}* is generated by the reference filtering block and is used by the speed control as reference value, as indicated in Figure 14, Figure 14 illustrates an example for motor-side *q̇_{m,ffw}* for 1 second that comprises 1001 samples. The x-axis indicates the time and runs from 0 seconds to 1 second, the y-axis indicates the motor-side *q̇m_{,ffw}* for a certain time.

For reference filtering, the output-side inertia *Jₐ* and coupling stiffness *k_{T}* have to be known. For calculating the torque feed-forward signal *τ_{ffw}*, the effective motor-side inertia *Jₘ* is required as an additional parameter. It is assumed that values for *Jₘ*, *Jₐ*, and *k_{T}* are obtained from the system identification step 1 as illustrated in Figure 1.

Moreover, as visualized in Figure 1, ILC is added on top of the conventional servo structure. Using the reference motion profile as input, a conventional ILC approach would produce a feed-forward torque, for example. The (output) tracking error, as indicated in step 4 (encircled 4 in Figure 1), is measured while executing the motion profile or motion sequence. After completing profile execution or sequence execution, the recorded tracking error is used to adapt the ILC parameters. Background on the ILC concept is provided, for example, in T. Oomen: "Learning in machines", in: Mikroniek, 2018. Crucially, during execution of the motion profile, the ILC block remains unchanged. Thus, in contrast to adaptive control approaches, no stability issues arise.

Referring now to Option A, which is indicated in Figure 1 by the letter "A", the Option A as disclosed is to generate, for example, feed-forward torque not solely as an output of the ILC block (see summation circles in Figure 1, i.e. the circles at which two or three arrows are pointing at or are directed to). Instead, it is disclosed to add (see summation circles) the ILC torque output to the model-based feed-forward term. Intuitively speaking, it is modelled what can be modelled, and it is learned the rest. Thereby, the ILC block can be deactivated at any point in time, falling back to the conventional model-based solution.

Referring now to Option B, which is indicated in Figure 1 by the letter "B", the Option B as disclosed is to generate, for example, multiple ILC outputs, namely not only refining the torque feed-forward signal, for example, but also force, motor position and speed references (see arrow indicated with letter "B" in Figure 1). Thereby, it is prevented feed-back and feed-forward controls form "competing" against each other. While the same high tracking accuracy can be achieved, the disclosed modification is much more robust to subsequent changes in the feed-back control parameters and enables to use the motor position and speed tracking errors for supervision.

It shall be noted that the ILC scheme relies on knowing the output position tracking error. If no load-side position measurement is available, the system model obtained in step 1 in Figure 1 can be used to estimate the load-side position based on motor position measurements. The ILC calculations required after each experiment are computationally slim. The ILC parameter update rule reads ${{Θ}^{˜}}^{k + 1} = Q ⋅ {{Θ}^{˜}}^{k} + L ⋅ {{e}^{˜}}^{k} ,$ where ${{Θ}^{˜}}^{k} , {{Θ}^{˜}}^{k + 1} ∈ {ℝ}^{M}$ are the vector of parameters in the current (k) and next (k+1) iteration, respectively. The dimension M depends on the specific implementation but is as small as *M=6* in the simulation example below. The measured (sampled) output tracking error is denoted as ${{e}^{˜}}^{k} ∈ {ℝ}^{N}$, where N is the number of samples in the error signal. The parameter update matrices Q and L are given by $Q = {\left[{K}^{k + {1}^{T}}{W}_{e}{K}^{k + 1}+{\sum }_{i = 1}^{3} {{Ψ}^{˜}}_{i}^{k + {1}^{T}}⋅\left({W}_{{Δu}_{i}}+{W}_{{u}_{i}}\right)⋅{{Ψ}^{˜}}_{i}^{k + 1}\right]}^{- 1} ⋅ \left[{K}^{k + {1}^{T}}⋅{W}_{e}⋅{K}^{k}+{\sum }_{i = 1}^{3} {{Ψ}^{˜}}_{i}^{k + {1}^{T}}⋅{W}_{{Δu}_{i}}⋅{{Ψ}^{˜}}_{i}^{k}\right] ,$ $L = {\left[{K}^{k + {1}^{T}}{W}_{e}{K}^{k + 1}+{\sum }_{i = 1}^{3} {{Ψ}^{˜}}_{i}^{k + {1}^{T}}⋅\left({W}_{{Δu}_{i}}+{W}_{{u}_{i}}\right)⋅{{Ψ}^{˜}}_{i}^{k + 1}\right]}^{- 1} ⋅ {K}^{k + {1}^{T}} ⋅ {W}_{e} ,$

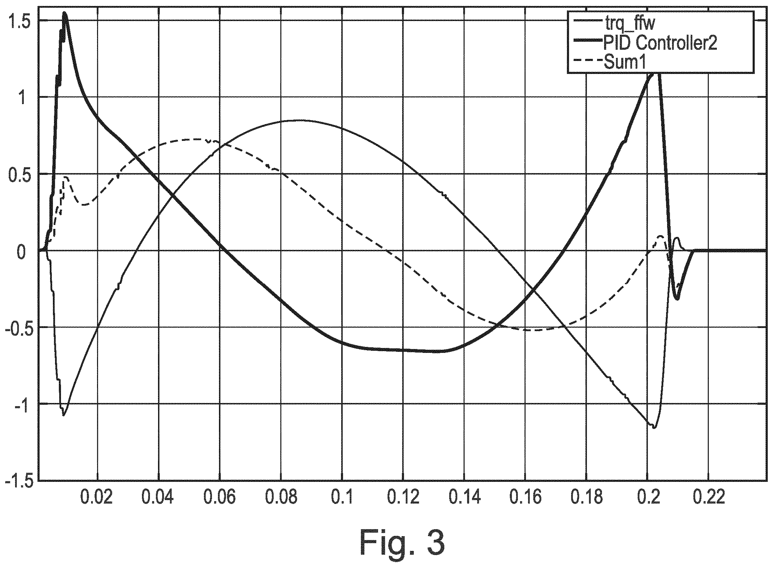

Notes regarding the update matrices:
- The matrix needed to invert is *M*×*M*, where *M* is the number of parameters (e.g. 6 in provided tests - wherein it should be noted that compared to only data-based ILC approaches (i.e. only first data as outlined below in more detail with reference to Figure 3 are used and no second data as outlined below in more detail with reference to Figure 3 are used), 6 is extremely low);
- *Wₑ*, *W*_{Δ*ui*}, *Wᵤᵢ* are matrices of tuning parameters; and
- *K^{k}* and Ψ̃*^{k}* contain the nominal system dynamics and the basis functions (load position reference and subsequent derivatives).

The matrices of tuning parameters offer the user some degrees of freedom on where to put the emphasis of the optimization:
- *Wₑ* puts penalties on the absolute value error signal.
- *W*_{Δ*ui*} puts penalties on the changes in the ILC input.
- *Wᵤᵢ* puts penalties on the absolute value in the ILC input.

Usually, only the values of the main diagonal are used in these matrices to emphasis more the start, mid-part or the end part of the error signal.

An example is given in the following for reasons of understandability:
All three *Wₑ*, *W*_{Δ*ui*}, *Wᵤᵢ* matrices can be defined as simple as the unity matrix *I_{N}.* Later, modifications could be made if necessary.

Referring now to Option C, the Option C is to infer a suitable choice for the ILC basis functions Ψ from the dynamics of the system. As it is known from flatness-based feedforward of two-mass systems (see "De Luca, A.", for example), an ideal model-based feed-forward contains contributions from output-side speed, acceleration, jerk, and snap (the special case without friction and torsional damping is given in equation (1) above). Hence, the basis functions are chosen as ${Ψ}_{1}^{k} = \left[{\dot{q}}_{a , ref}^{k} {{q}^{¨}}_{a , ref}^{k} {{q}^{⃛}}_{a , ref}^{k} {{q}^{⃜}}_{a , ref}^{k}\right] ∈ {ℝ}^{N \times 4} ,$ ${Ψ}_{2}^{k} = \left[{{q}^{¨}}_{a , ref}^{k} {{q}^{⃛}}_{a , ref}^{k}\right] ∈ {ℝ}^{N \times 2} ,$ ${Ψ}_{3}^{k} = \left[{\dot{q}}_{a , ref}^{k} {{q}^{¨}}_{a , ref}^{k}\right] ∈ {ℝ}^{N \times 2} ,$ **where** Ψ₁ relates to torque feed-forward, Ψ₂ relates to motor speed references, and Ψ₃ relates to motor position references, for example.

It should be noted that according to several examples of the present disclosure and throughout the present disclosure, the index ref refers to trajectories generated by the reference trajectory generator. The index a refers to arm-side; m would refer to motor-side. The superscript k denotes that it is dealt with the time series of the k-iteration.

An example is given in the following for reasons of understandability:
The basis functions use the trajectories of the trajectory generator (-> feedforward control) to construct the basis functions. These can for example look like depicted in Figure 15. Figure 15 illustrates an example for input to trajectory planing: *q_{a,ref}*, plotted for 1001 sampling points in a time range of 1 second. The x-axis indicates the sampling points and runs from 0 sampling points to 1200 sampling points, the y-axis indicates *q_{a,ref}*, for a certain number of sampling points.

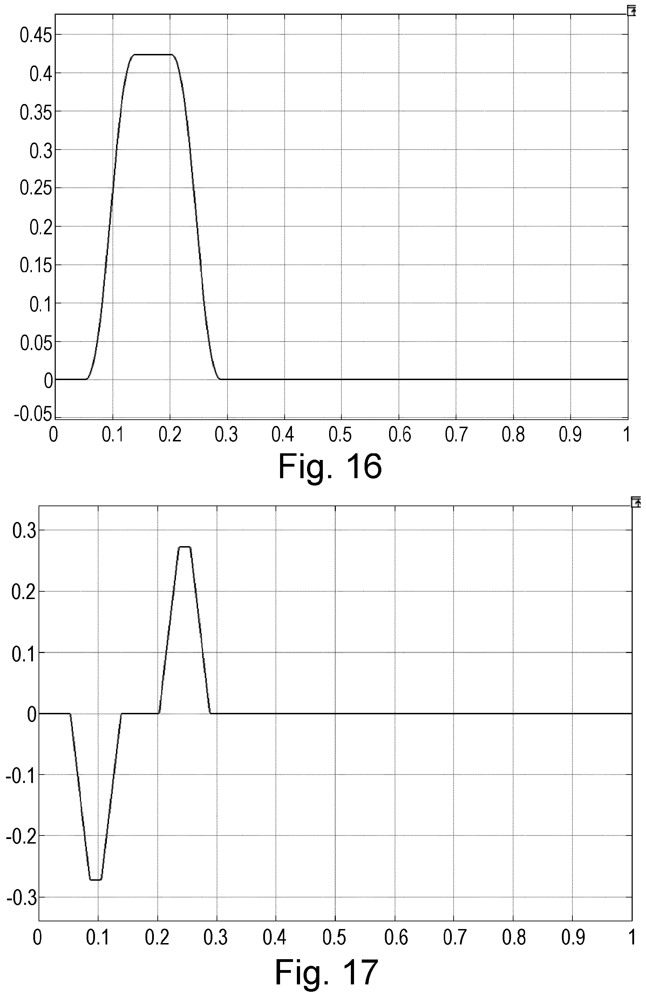

Figure 16 illustrates an example for: derived first component of the first Basis Function *Ψ₁* and second component of the third Basis Function *Ψ₃* for 1 second that comprises 1001 sampling points. The x-axis indicates the time and runs from 0 seconds to 1 second, the y-axis indicates the derived first component of the first Basis Function *Ψ₁* and the second component of the third Basis Function *Ψ₃* for a certain time.

Figure 17 illustrates an example for: derived second component of the first Basis Function *Ψ₁* and first component of the second Basis Function *Ψ₂* and second component of the third Basis Function *Ψ₃* for 1 second that comprises 1001 sampling points. The x-axis indicates the time and runs from 0 seconds to 1 second, the y-axis indicates the derived second component of the first Basis Function *Ψ₁* and first component of the second Basis Function *Ψ₂* and second component of the third Basis Function *Ψ₃* for a certain time.

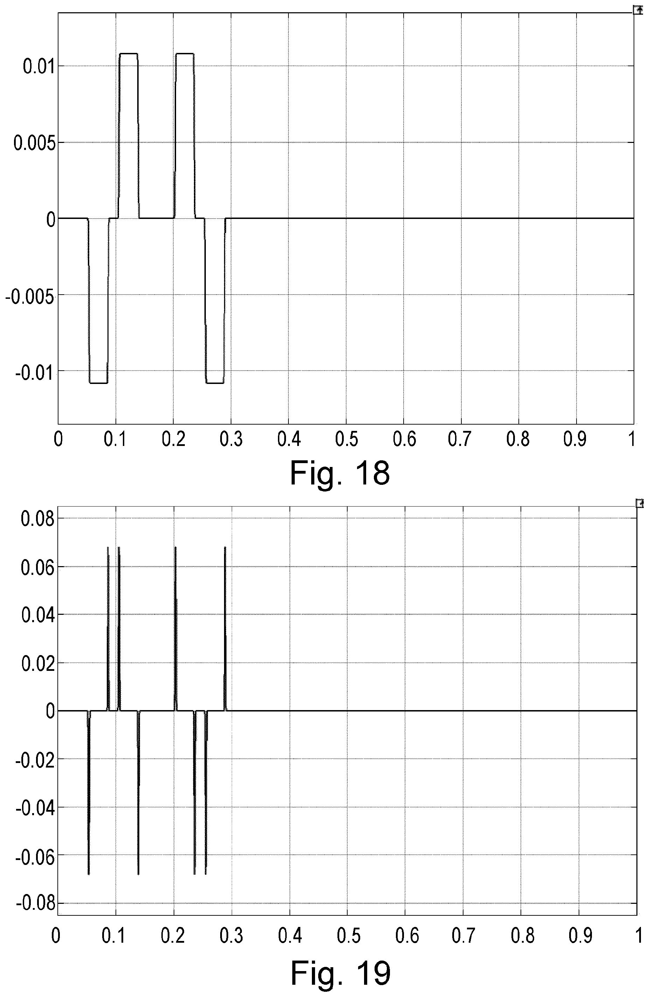

Figure 18 illustrates an example for: derived third component of the first Basis Function *Ψ₁* and second component of the second Basis Function *Ψ₂* for 1 second that comprises 1001 sampling points. The x-axis indicates the time and runs from 0 seconds to 1 second, the y-axis indicates the derived third component of the first Basis Function *Ψ₁* and the second component of the second Basis Function Ψ₂ for a certain time.

Figure 19 illustrates an example for: derived forth component of the first Basis Function Ψ₁ for 1 second that comprises 1001 sampling points. The x-axis indicates the time and runs from 0 seconds to 1 second, the y-axis indicates the derived forth component of the first Basis Function Ψ₁ for a certain time.

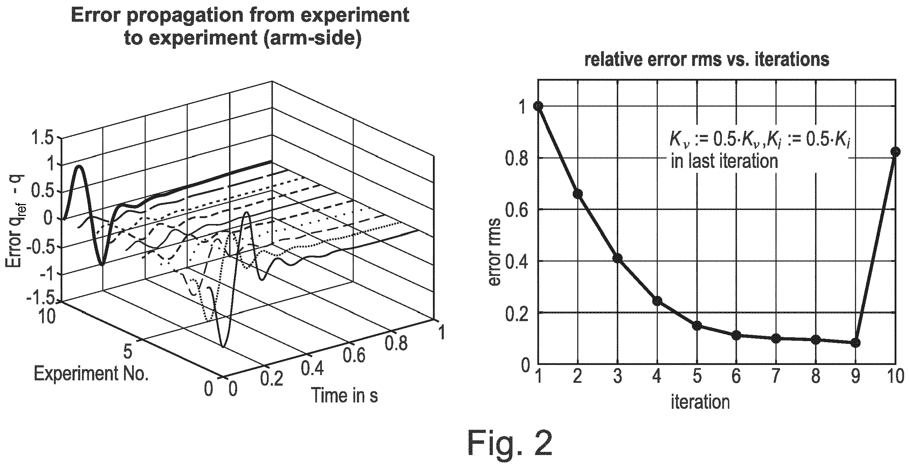

Moreover, according to several examples of the present disclosure, to illustrate the effectiveness of the approach, it is considered a simulation example of a two-mass system with nonlinear compliance and uncertain parameters. The output is to track a jerk-limited profile. In a first simulation, ILC is applied in a conventional way, only producing a torque feed-forward signal. During the first 9 executions of the motion profile, the system remains unchanged. As Figure 2 shows, the output tracking error is reduced significantly by ILC. In the right figure, the x-axis refers to the number of iterations k. In each iteration a position motion task was executed and the ILC update applied. The root mean square (rms) error of the error signal between planned and measured *qₐ* is plotted for each iteration k.

However, as shown in Figure 3, while the resulting torque ("Sum1" in Figure 3) drives the load with high tracking accuracy, the feed-back control ("PID Controller2" in Figure 3) and feed-forward control ("trq_ffw" in Figure 3) heavily work against each other with the ILC torque output dominating. In the tenth execution (k=10) of the motion profile, the gains *Kᵥ, Kᵢ* of the speed PI controller are reduced by 50%, which might happen in practice due to too aggressive PI controllers exciting vibrations. As the ILC has "learned" to overpower the previously aggressive PI controller, the tracking error significantly increases, and re-training the ILC would be required.

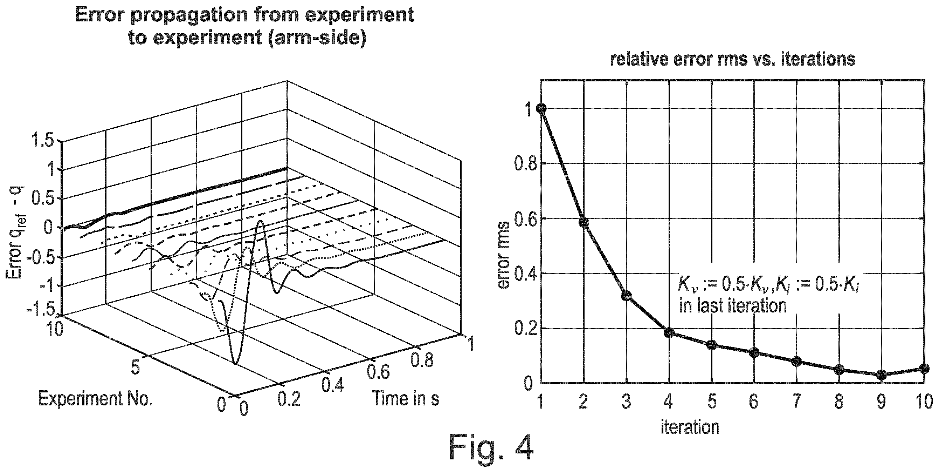

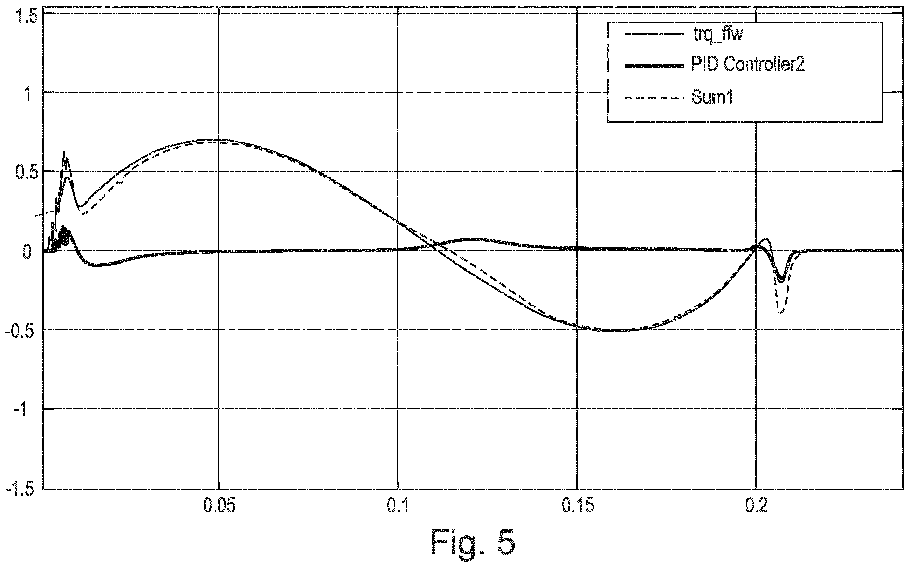

In contrast to that, Figure 4 shows, according to several examples of the present disclosure, the result of the disclosed approach in the same situation. Despite the significant change in speed PI parameters in the tenth experiment, the output tracking performance is still very high. The reason for this beneficial behavior is shown in Figure 5. As the modified ILC approach also adapts the motor reference filtering, it achieves high output tracking accuracy while at the same time keeping motor position and speed errors small. This results in the feed-back control ("PID Controller2" in Figure 5) almost doing nothing. Note that this is desirable from a controls perspective, as feed-forward control should ideally take care of tracking, while feed-back control is devoted to disturbance rejection and handling uncertainties. Hence, the total torque applied to the system ("Sum1" in Figure 5) almost coincides with the feed-forward torque ("trq_ffw" in Figure 5). As motor tracking errors are close to zero, the entire scheme is robust to changes in the feed-back controller parameters. If a significant magnitude in the motor position or speed tracking error is detected, this points to an issue, e.g. external disturbance, that could be used to trigger supervision.

The same behavior can be observed for changes in the feed-forward trajectory, e.g. different start time, and noise rejection, e.g. stemming from poor sensor performance.

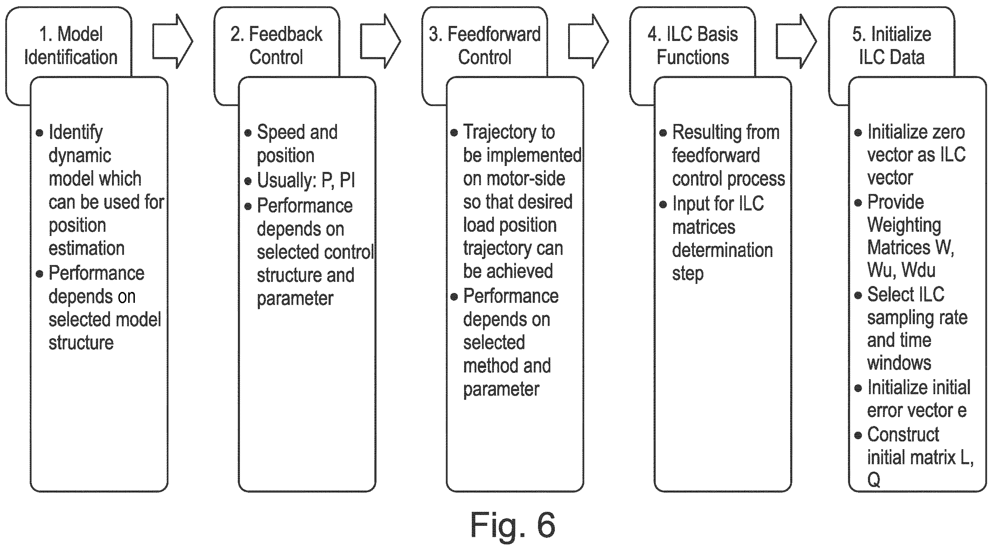

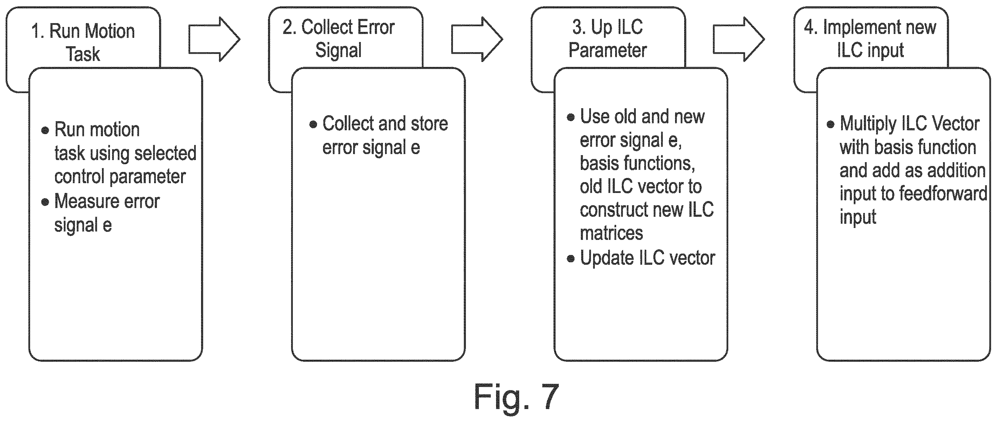

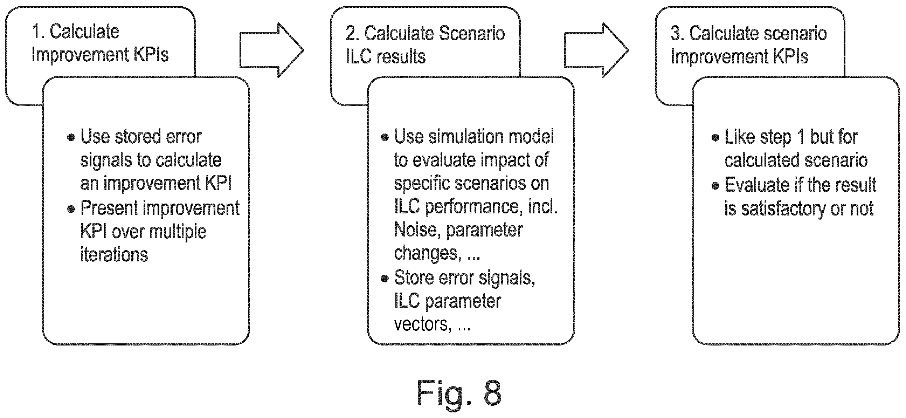

According to several examples of the present disclosure and with reference to Figures 6 to 8, the process graphics according to Figures 6 to 8 illustrate the three main ILC processes: Process step 1 as setup and preparation of the ILC in Figure 6. Process step 2 as running the ILC in Figure 7. Process step 3 as evaluating the ILC in Figure 8.

Process step 1 comprises the following sequence of sub-steps:
1. Model Identification: a dynamic model is identified, which can be used for position estimation. A performance depends on the selected model structure.
2. Feedback Control: Feedback control is performed for (motor) speed and (motor) position. Usually P, PI (proportional control for position, proportional-integral control for speed). A performance depends on the selected control structure and parameter.
3. Feedforward Control: A trajectory is to be implemented on motor-side so that a desired load position trajectory can be achieved. A performance depends on the selected method and parameter.
4. ILC Basis Function: The ILC basis function results from the feed-forward control process. The ILC basis function may be input for an ILC matrices determination step.
5. Initialize ILC Data: There may be Initialized a zero vector as ILC vector. Weighting Matrices *Wₑ*, *W*_{Δ}*ᵤ, Wᵤ* as indicated above may be provided. ILC sampling rate and time windows may be selected. An initial error vector e may be initialized. Initial matrix L, Q may be constructed.

Process step 2 comprises the following sequence of sub-steps:
1. Run Motion Task: A motion task may be run by using selected control parameter. An error signal e may be measured.
2. Collect Error Signal: The error signal e may be collected and stored.
3. Update ILC Parameter: Old and new error signal e may be used, basis functions may be used, old ILC vector may be used to construct new ILC matrices. The ILC vector may be updated accordingly.
4. Implement new ILC input: ILC vector may be multiplied with basis function and may be added as addition input to feed-forward input.

Process step 3 comprises the following sequence of sub-steps:
1. Calculate Improvement Key Performance Indicators (KPIs): Use stored error signals to calculate an improvement KPI. Present improvement KPI over multiple iterations.
2. Calculate Scenario ILC results: Use simulation model to evaluate impact of specific scenarios on ILC performance, including, for example, noise, parameter changes, ... . Store error signals, ILC parameter vectors, ....
3. Calculate scenario Improvement KPIs: Like sub-step 1. in process step 3 but for calculated scenario. Evaluate if the result is satisfactory or not.

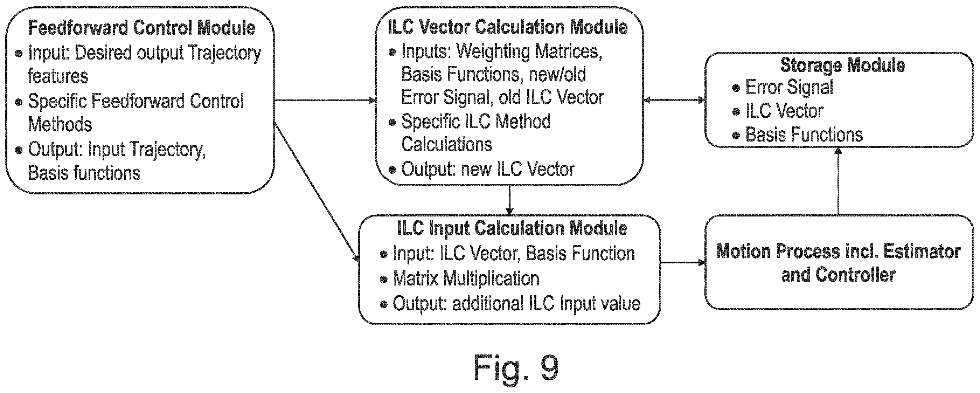

Referring now to Figure 9, Figure 9 illustrates an architecture overview, according to several examples of the present disclosure. In more detail, Figure 9 provides an overview on how ILC integrates with other control system components, according to several examples of the present disclosure.

The architecture comprises a Feedforward Control Module, an ILC Vector Calculation Module, a Storage Module, an ILC Input Calculation Module, and a Motion Process including Estimator and Controller.

In the Feedforward Control Module, an input to the Feedforward Control Module may represent desired output trajectory features. Specific feedforward control methods are provided and/or executed in the Feedforward Control Module. An output obtainable from the Feedforward Control Module is an input trajectory and basis functions.

The Feedforward Control Module is communicatively connected with the ILC Vector Calculation Module.

In the ILC Vector Calculation Module, inputs to the ILC Vector Calculation Module are one or more of weighting matrices, basis functions, new and/or old error signal and old ILC vector, for example. Specific ILC method calculations are provided and/or executed in the ILC Vector Calculation Module. An output obtainable from the ILC Vector Calculation Module is a new ILC vector.

The Feedforward Control Module and the ILC Vector Calculation Module are communicatively connected with the ILC Input Calculation Module.

In the ILC Input Calculation Module, an input to the ILC Input Calculation Module is ILC vector and basis function. Matrix multiplication is provided and/or executed in the ILC Input Calculation Module. An output obtainable from the ILC Input Calculation Module is additional ILC input value.

The ILC Input Calculation Module is communicatively connected with the Motion Process including Estimator and Controller.

The Motion Process including Estimator and Controller and the ILC Vector Calculation Module are communicatively connected with the Storage Module. The Storage Module stores and/or comprises one or more of error signals, ILC vectors and basis functions.

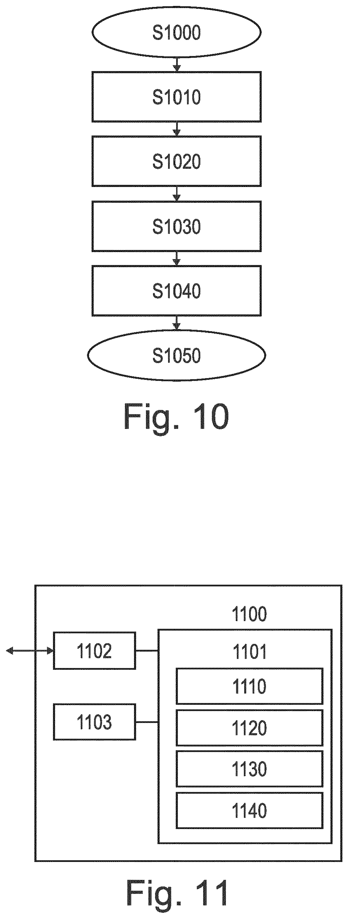

Referring now to Figure 10, Figure 10 illustrates a flowchart indicative of a method according to several examples of the present disclosure. The method is for achieving high tracking performance in servo motion application in an industrial context. The method may comprise one or more of such methods or options Option A, Option B and Option C as outlined above. The method may comprise one or more of such process steps 1 to 3 (and one or more of the corresponding sub-steps) as outlined above with reference to Figures 6 to 8. The method may be applied in such architecture as outlined above with reference to Figure 9.

The method starts in S1000.

In S1010, the method comprises applying ILC on the servo motion application for controlling a k-th run of a motion sequence of the servo motion application.

In S1020, the method comprises, during and/or after the k-th run, obtaining, from the application of the ILC on the servo motion application, first data indicative of an ILC output control signal based on a difference between a movement trajectory of the k-th run and a predetermined movement trajectory of the motion sequence.

In S1030, the method comprises obtaining, from a feed-forward control for controlling the servo motion application, second data different from the first data, wherein the second data are indicative of a feed-forward control element for controlling a difference between a movement trajectory of a (k+1)-th run of the motion sequence to be performed by the servo motion application and the predetermined movement trajectory.

In S1040, the method comprises controlling the (k+1)-th run of the servo motion application based on the first data and the second data.

The method ends in S1050.

According to several examples of the present disclosure, obtaining the first data may comprise obtaining the ILC output control signal to be indicative of at least one of:
- a torque feed-forward of the servo motion application,
- a force feed-forward of the servo motion application,
- a motor position feed-forward of the servo motion application, and
- a motor speed feed-forward of the servo motion application.

According to several examples of the present disclosure, obtaining the first data may further comprise: measuring or estimating the movement trajectory during the k-th run.

According to several examples of the present disclosure, measuring or estimating the movement trajectory during the k-th run may further comprise: measuring or estimating at least one of the following during the k-th run:
- a torque of the servo motion application,
- a force of the servo motion application,
- a motor position of the servo motion application, and
- a motor speed of the servo motion application.

According to several examples of the present disclosure, obtaining the second data from the feed-forward control may comprise: obtaining, as the feed-forward control element, a model-based feed-forward term for a model-based feed-forward control of the servo motion application to run the motion sequence. Controlling the (k+1)-th run of the servo motion application may comprises: adding the ILC output control signal to the model-based feed-forward term; obtaining a modified control signal as a result from the adding; and controlling the (k+1)-th run based on the modified control signal.

Said in other words, the method according to Figure 10 may be understood as comprising: A method for achieving high tracking performance in servo motion application in an industrial context, the method comprising:
- applying iterative learning control, ILC, on the servo motion application for controlling a k-th run of a motion sequence of the servo motion application;
- during and/or after the k-th run, obtaining, from the application of the ILC on the servo motion application, an ILC output control signal based on a difference between a movement trajectory of the k-th run and a predetermined movement trajectory of the motion sequence;
- obtaining, as a feed-forward control element, a model-based feed-forward term for a model-based feed-forward control of the servo motion application to run the motion sequence, the feed-forward control element for controlling a difference between a movement trajectory of a (k+1)-th run of the motion sequence to be performed by the servo motion application and the predetermined movement trajectory;
- adding the ILC output control signal to the model-based feed-forward term;
- obtaining a modified control signal as a result from the adding; and
- controlling the (k+1)-th run based on the modified control signal.

The model-based feed-forward term as the feed-forward control element may represent such Option A as outlined above with reference to Figure 1.

According to several examples of the present disclosure, the method may further comprise:
- deactivating the model-based feed-forward term by setting the model-based feed-forward term to zero;
- obtaining the ILC output control signal as a result from the adding due to the model-based feed-forward term being deactivated; and
- controlling a run of the motion sequence of the servo motion application based on the ILC output signal and the model-based feed-forward term being deactivated.

Hence, said in other words, due to the deactivation of the model-based feed-forward term, the second data may be equal to zero. Thus, a control may be performed based on the first data only.

According to several examples of the present disclosure, the ILC output control signal is one of:
- an ILC torque feed-forward control signal for controlling a torque feed-forward of the servo motion application,
- an ILC force feed-forward control signal for controlling a force feed-forward of the servo motion application,
- an ILC motor position feed-forward control signal for controlling a motor position feed-forward of the servo motion application, and
- an ILC motor speed feed-forward control signal for controlling a motor speed feed-forward of the servo motion application.

Obtaining the second data from the feed-forward control may comprise: after the k-th run, obtaining as the feed-forward control element, based on the difference between the movement trajectory of the k-th run and the predetermined movement trajectory of the motion sequence, at least one of the following signals different from the ILC output control signal:
- the ILC force feed-forward control signal,
- the ILC force feed-forward control signal
- the ILC motor position feed-forward control signal, and
- the ILC motor speed feed-forward control signal.

Controlling the (k+1)-th run of the servo motion application may comprise: controlling the (k+1)-th run based on the ILC output control signal and the feed-forward control element.

Said in other words, the method according to Figure 10 may be understood as comprising: A method for achieving high tracking performance in servo motion application in an industrial context, the method comprising:
- applying iterative learning control, ILC, on the servo motion application for controlling a k-th run of a motion sequence of the servo motion application;
- during and/or after the k-th run, obtaining, from the application of the ILC on the servo motion application, an ILC output control signal based on a difference between a movement trajectory of the k-th run and a predetermined movement trajectory of the motion sequence;
wherein the ILC output control signal is one of:
- an ILC torque feed-forward control signal for controlling a torque feed-forward of the servo motion application,
- an ILC force feed-forward control signal for controlling a force feed-forward of the servo motion application,
- an ILC motor position feed-forward control signal for controlling a motor position feed-forward of the servo motion application, and
- an ILC motor speed feed-forward control signal for controlling a motor speed feed-forward of the servo motion application;

- obtaining, after the k-th run, as a feed-forward control element, based on the difference between the movement trajectory of the k-th run and the predetermined movement trajectory of the motion sequence, at least one of the following signals different from the ILC output control signal:
   - the ILC force feed-forward control signal,
   - the ILC force feed-forward control signal
   - the ILC motor position feed-forward control signal, and
   - the ILC motor speed feed-forward control signal; and
- controlling the (k+1)-th run based on the ILC output control signal and the feed-forward control element.

The feed-forward control element for controlling a difference between a movement trajectory of a (k+1)-th run of the motion sequence to be performed by the servo motion application and the predetermined movement trajectory.

Obtaining as the feed-forward control element at least one of these signals different from the ILC output control signal may represent such Option B as outlined above with reference to Figure 1.

According to several examples of the present disclosure, obtaining the second data from the feed-forward control may comprise: deriving, as the feed-forward control element, a basis function from knowledge about dynamics of the servo motion application. Controlling the (k+1)-th run of the servo motion application may comprise: controlling the (k+1)-th run based on the ILC output control signal and the basis function.

Said in other words, the method according to Figure 10 may be understood as comprising: A method for achieving high tracking performance in servo motion application in an industrial context, the method comprising:
- applying iterative learning control, ILC, on the servo motion application for controlling a k-th run of a motion sequence of the servo motion application;
- during and/or after the k-th run, obtaining, from the application of the ILC on the servo motion application, an ILC output control signal based on a difference between a movement trajectory of the k-th run and a predetermined movement trajectory of the motion sequence;
- deriving, as a feed-forward control element, a basis function from knowledge about dynamics of the servo motion application, the feed-forward control element for controlling a difference between a movement trajectory of a (k+1)-th run of the motion sequence to be performed by the servo motion application and the predetermined movement trajectory; and
- controlling the (k+1)-th run based on the ILC output control signal and the basis function.

The basis function derived as the feed-forward control element may represent such Option C as outlined above with reference to Figure 1.

According to several examples of the present disclosure, the basis function may comprise: a first basis function, ${Ψ}_{1}^{k}$, related to a torque feed-forward associated with the servo motion application, a second basis function, ${Ψ}_{2}^{k}$, related to motor speed references associated with the servo motor application, and a third basis function, ${Ψ}_{3}^{k}$, related to motor position references associated with the servo motion application.

According to several examples of the present disclosure, the basis function may be a function that considers the physics of the servo motion application. Driving the basis function may further comprise: updating the basis function to satisfy the following equation: ${{θ}^{˜}}^{k + 1} = Q ⋅ {{θ}^{˜}}^{k} + L ⋅ {{e}^{˜}}^{k} ,$ wherein *θ̃^{k}* is a parameter vector in the k-th run, wherein *θ̃*^{*k+*1} is a parameter vector in the (k+1)-th run, and wherein Q and L are parameter update matrices associated with the basis function.

According to several examples of the present disclosure, the k-th run and the (k+1)-th run are iterations in a sequence of runs of the motion sequence.

Referring now to Figure 11, Figure 11 shows a block diagram schematically illustrating a data processing apparatus 1100 according to several examples of the present disclosure. In particular, there is provided an apparatus 1100 for achieving high tracking performance in servo motion application in an industrial context. The apparatus 31100 comprises one or more processors 1101 being configured to carry out the method as outlined above with reference to Figure 10, for example. The apparatus 1100 may comprise means to perform one or more of such methods or options Option A, Option B and Option C as outlined above. The apparatus 1100 may comprise means to perform one or more of such process steps 1 to 3 (and one or more of the corresponding sub-steps) as outlined above with reference to Figures 6 to 8. The apparatus 1100 may comprise means to be applied in such architecture as outlined above with reference to Figure 9.

In more detail, according to various examples, the apparatus 1100 being configured to carry out the method of Figure 10, for example, may comprise a processing circuitry, a processing function, a processing means, a processing unit or a processor 1101, which enables the apparatus 1100 to participate in achieving high tracking performance in servo motion application in an industrial context. The processor 1101 may comprise one or more processing portions or functions, wherein the processing portions or functions may be provided as one or more physical or virtual entities. The apparatus 1100 may comprise one or more communication interfaces 1102. The apparatus 1100 may further comprise a memory or memory unit 1103 for storing data, programs and/or instructions to be executed by the processor. The memory 1103 may be a memory internal to the apparatus 1100 or may be a memory external to the apparatus 1100, for example at a cloud server. The processor 1101 may comprise one or more portions, which enable the apparatus 1100 to execute the method of Figure 10, for example. According to several examples of the present disclosure, an applying portion 1110 may be configured to perform such applying according to S1010 of Figure 10, an obtaining portion 1120 may be configured to perform such obtaining according to S1020 of Figure 10, an obtaining portion 1130 may be configured to perform such obtaining according to S1030 of Figure 10, and a controlling portion 1140 may be configured to perform such controlling according to S1040 of Figure 10.

According to several examples of the present disclosure, the respective portions of the apparatus 1100 may also be understood as means for carrying out the certain function.

According to several examples of the present disclosure, the data processing apparatus may be further configured to be communicatively connected with a servomotor associated with a servo motion application, the servo motion application for executing positioning tasks, wherein the data processing apparatus may further be configured to apply the method according to Figure 10 on the servo motion application.

According to several examples of the present disclosure, there is provided a data processing system achieving high tracking performance in servo motion application in an industrial context. The data processing system comprises the apparatus 1100 according to Figure 11. Additionally or alternatively, the data processing system comprises means for carrying out the method according to Figure 10. The data processing system may comprise such system 100 and/or architecture 900 as illustrated with reference to Figures 1 and 9, respectively. By "data processing system", according to several examples, it may be meant a car manufacturing line, a machine, an assembly line, a conveyor belt, a paper mill, a rolling mill, robotics, etc.

According to several examples of the present disclosure, there is provided an industrial plant comprising the apparatus 1100 according to Figure 11 and/or the data processing system as outlined above. The industrial plant may be an industrial plant on and/or at which a servo motion application is applied.

According to several examples of the present disclosure, there is provided a computer-readable medium comprising instructions which, when executed by a computing system, causes the computing system to perform the method as outlined with reference to Figure 10. The computer-readable medium may be transitory or non-transitory, volatile or non-volatile.

According to several examples of the present disclosure, there is provided a computer program product comprising instructions which, when executed by a computing system, enable or cause the computing system to perform the method as outlined with reference to Figure 10. The computer program product may comprise a computer-readable medium comprising instructions of the computer program product. The computer-readable medium as mentioned above may have stored thereon the computer program product.

According to several examples of the present disclosure, there is provided a use of at least one of the apparatus 1000, the data processing system as outlined above, the industrial plant as outlined above, the computer-readable medium as outlined above, and the computer program product as outlined above. In particular, there is provided use of the method as outlined with reference to Figure 10 for achieving high tracking performance in servo motion application in an industrial context, and there is provided use the servo motion application that has been trained according to the method of Figure 10, for example.

Optional features of the method as outlined with reference to Figure 10 may form part of the apparatus 1100, the data processing system, the industrial plant, and the use, mutatis mutandis.

Any unit, module, circuitry or methodology described herein may be implemented using hardware, software, and/or firmware configured to perform any of the operations described herein. Hardware may comprise one or more processor cores, field-programmable gate arrays (FPGAs), application-specific integrated circuits (ASICs), application-specific standard products (ASSPs), system-on-a-chip systems (SOCs), complex programmable logic devices (CPLDs), etc. Software may be embodied as a software package, code, instructions, instruction sets and/or data recorded on at least one transitory or non-transitory computer readable storage medium. Firmware may be embodied as code, instructions or instruction sets and/or data hard-coded in memory devices (e.g., non-volatile memory devices).

If implemented in software, the functions can be stored on or transmitted over as one or more instructions or code on a computer-readable medium. Computer-readable media include computer-readable storage media. Computer-readable storage media can be any available storage media that can be accessed by a computer. By way of example, and not limitation, such computer-readable storage media can comprise FLASH storage media, RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal may be included within the scope of computer-readable storage media. Computer-readable media also includes communications media including any medium that facilitates transfer of a computer program from one place to another. A connection, for instance, can be a communications medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communications medium. Combinations of the above should also be included within the scope of computer-readable media.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features.

It has to be noted that embodiments of the invention are described with reference to different categories. In particular, some examples are described with reference to methods whereas others are described with reference to devices. However, a person skilled in the art will gather from the description that, unless otherwise notified, in addition to any combination of features belonging to one category, also any combination between features relating to different category is considered to be disclosed by this application. However, all features can be combined to provide synergetic effects that are more than the simple summation of the features.

While the invention has been illustrated and described in detail in the drawings and foregoing description, such illustration and description are to be considered exemplary and not restrictive. The invention is not limited to the disclosed embodiments. Other variations to the disclosed embodiments can be understood and effected by those skilled in the art, from a study of the drawings, the disclosure, and the appended claims.

The mere fact that certain measures are recited in mutually different dependent claims does not indicate that a combination of these measures cannot be used advantageously.

Any reference signs in the claims should not be construed as limiting the scope.

## Claims

1. A method for achieving high tracking performance in servo motion application in an industrial context, the method comprising:
applying (S1010) iterative learning control, ILC, on the servo motion application for controlling a k-th run of a motion sequence of the servo motion application;
during and/or after the k-th run, obtaining (S1020), from the application of the ILC on the servo motion application, first data indicative of an ILC output control signal based on a difference between a movement trajectory of the k-th run and a predetermined movement trajectory of the motion sequence;
obtaining (S1030), from a feed-forward control for controlling the servo motion application, second data different from the first data, wherein the second data are indicative of a feed-forward control element for controlling a difference between a movement trajectory of a (k+1)-th run of the motion sequence to be performed by the servo motion application and the predetermined movement trajectory; and
controlling (S1040) the (k+1)-th run of the servo motion application based on the first data and the second data.

2. The method according to claim 1, wherein obtaining the first data comprises obtaining the ILC output control signal to be indicative of at least one of:
a torque feed-forward of the servo motion application,
a force feed-forward of the servo motion application,
a motor position feed-forward of the servo motion application, and
a motor speed feed-forward of the servo motion application.

3. The method according to claim 1 or 2, wherein obtaining the first data further comprises: measuring or estimating the movement trajectory during the k-th run.

4. The method according to claim 3, wherein measuring or estimating the movement trajectory during the k-th run further comprises: measuring or estimating at least one of the following during the k-th run,
a torque of the servo motion application,
a force of the servo motion application,
a motor position of the servo motion application, and
a motor speed of the servo motion application.

5. The method according to any of claims 1 to 4,
wherein obtaining the second data from the feed-forward control comprises:
obtaining, as the feed-forward control element, a model-based feed-forward term for a model-based feed-forward control of the servo motion application to run the motion sequence;
wherein controlling the (k+1)-th run of the servo motion application comprises:
adding the ILC output control signal to the model-based feed-forward term;
obtaining a modified control signal as a result from the adding; and
controlling the (k+1)-th run based on the modified control signal.

6. The method according to claim 5, further comprising
deactivating the model-based feed-forward term by setting the model-based feed-forward term to zero;
obtaining the ILC output control signal as a result from the adding due to the model-based feed-forward term being deactivated; and
controlling a run of the motion sequence of the servo motion application based on the ILC output signal and the model-based feed-forward term being deactivated.

7. The method according to any of claims 1 or 3 to 6,
wherein the ILC output control signal is one of:
• an ILC torque feed-forward control signal for controlling a torque feed-forward of the servo motion application,
• an ILC force feed-forward control signal for controlling a force feed-forward of the servo motion application,
• an ILC motor position feed-forward control signal for controlling a motor position feed-forward of the servo motion application, and
• an ILC motor speed feed-forward control signal for controlling a motor speed feed-forward of the servo motion application;
wherein obtaining the second data from the feed-forward control comprises:
after the k-th run, obtaining as the feed-forward control element, based on the difference between the movement trajectory of the k-th run and the predetermined movement trajectory of the motion sequence, at least one of the following signals different from the ILC output control signal:
• the ILC force feed-forward control signal,
• the ILC force feed-forward control signal
• the ILC motor position feed-forward control signal, and
• the ILC motor speed feed-forward control signal;
wherein controlling the (k+1)-th run of the servo motion application comprises:
controlling the (k+1)-th run based on the ILC output control signal and the feed-forward control element.

8. The method according to any of claims 1 to 7,
wherein obtaining the second data from the feed-forward control comprises:
deriving, as the feed-forward control element, a basis function from knowledge about dynamics of the servo motion application;
wherein controlling the (k+1)-th run of the servo motion application comprises:
controlling the (k+1)-th run based on the ILC output control signal and the basis function.

9. The method according to claim 8, wherein the basis function comprises:
a first basis function, ${Ψ}_{1}^{k}$, related to a torque feed-forward associated with the servo motion application,
a second basis function, ${Ψ}_{2}^{k}$, related to motor speed references associated with the servo motor application, and
a third basis function, ${Ψ}_{3}^{k}$, related to motor position references associated with the servo motion application.

10. The method according to claim 8 or 9,
wherein the basis function is a function that considers the physics of the servo motion application,
wherein deriving the basis function further comprises updating the basis function to satisfy the following equation: ${{θ}^{˜}}^{k + 1} = Q ⋅ {{θ}^{˜}}^{k} + L ⋅ {{e}^{˜}}^{k} ,$
wherein *θ̃^{k}* is a parameter vector in the k-th run,
wherein *θ̃*^{*k+*1} is a parameter vector in the (k+1)-th run,
wherein Q and L are parameter update matrices associated with the basis function, and
wherein *ẽ^{k}* is a parametrized error vector of the k-th run.

11. The method according to any of claims 1 to 10,
wherein the k-th run and the (k+1)-th run are iterations in a sequence of runs of the motion sequence.

12. A data processing apparatus (1100) comprising one or more processors being configured to carry out the method according to any of claims 1 to 11.

13. The data processing apparatus according to claim 12,
wherein the data processing apparatus is further configured to be communicatively connected with a servomotor associated with a servo motion application, the servo motion application for executing positioning tasks,
wherein the data processing apparatus is further configured to apply the method according to any of claims 1 to 11 on the servo motion application,
wherein the data processing apparatus comprises a memory for storing and reading data.

14. A computer program product comprising instructions which, when executed by a computing system, enable and/or cause the computing system to perform the method according to any of claims 1 to 11.

15. A computer-readable medium having stored thereon the computer program product according to claim 14.
